# EUROPÄISCHE PATENTSCHRIFT

(11) **EP 1 826 061 B1**
(45) Veröffentlichungstag und Bekanntmachung des Hinweises auf die Patenterteilung: **27.04.2011**
(21) Anmeldenummer: 07002981.4
(22) Anmeldetag: 13.02.2007
(51) Int. Cl.: B60Q 1/076

(54) **Scheinwerferverstellvorrichtung mit zwei Schwenkvorrichtungen**
Headlight adjusting device with two pivot devices
Dispositif de réglage de phares doté de deux dispositifs de basculement

(30) Priorität: 16.02.2006 DE 102006007505
(43) Veröffentlichungstag der Anmeldung: 29.08.2007
(73) Patentinhaber: odelo GmbH, 71409 Schwaikheim (DE)
(72) Erfinder: Apfelbeck, Roland, 94447 Plattling (DE)
(74) Vertreter: Kaufmann, Ursula Josefine

(56) Entgegenhaltungen:
- EP-A- 1 595 739
- CH-A- 127 672
- DE-A1- 3 931 196
- DE-A1- 10 217 191
- US-A1- 2003 002 288

## Beschreibung

Die Erfindung betrifft eine Scheinwerferverstellvorrichtung mit mindestens einem in einem Zwischenteil mittels einer Schwenkvorrichtung schwenkbar gelagerten Lichtmodul, wobei das Zwischenteil im Scheinwerfergehäuse direkt oder indirekt mittels einer weiteren Schwenkvorrichtung schwenkbar gelagert ist.

Aus der DE 198 02 023 A1 ist eine Scheinwerferverstellvorrichtung mit zwei Schwenkvorrichtungen bekannt. Jede Schwenkvorrichtung erfordert zu ihrer Betätigung eine Antriebseinheit. Diese stützen zusammen mit den Schwenklagern die zu schwenkenden Bauteile ab, so dass bei längerem Betrieb des Fahrzeugs die Gefahr des Verschleißes der Antriebseinheiten besteht. Außerdem beansprucht die Scheinwerferverstellvorrichtung einen großen Bauraum.

Die US 2003/002288 A1, offenbart eine Scheinwerferverstellvorrichtung mit einem in einem Zwischenteil mittels einer Schwenkvorrichtung schwenkbar gelagerten Lichtmodul, wobei das Zwischenteil im Scheinwerfergehäuse direkt oder indirekt mittels einer weiteren Schwenkvorrichtung schwenkbar gelagert ist. Das Lichtmodul kann jedoch nicht unabhängig um die eine oder andere der Schwenkachsen geschwenkt werden. Vielmehr muss es zunächst um eine z.B. vertikale Achse geschwenkt werden, bis ein Endanschlag erreicht ist, bevor das Lichtmodul um die z.B. horizontale Achse geschwenkt werden kann. Um das Zwischenteil separat zu verschwenken, ist ein weiterer Antrieb notwendig.

Die DE 102 17 191 A1, von der die Erfindung ausgeht, offenbart eine Scheinwerferverstellvorrichtung mit mindestens einem Lichtmodul, das in einem Zwischenteil mittels einer Schwenkvorrichtung um eine erste Schwenkachse schwenkbar gelagert ist, wobei das Zwischenteil im Scheinwerfergehäuse direkt oder indirekt mittels einer weiteren Schwenkvorrichtung um eine zweite Schwenkachse schwenkbar gelagert ist. Das Lichtmodul ist in einem inneren Halterahmen gehalten, der schwenkbar in einem äußeren, schwenkbar gelagerten äußeren Halterahmen gelagert ist. Das Verschwenken des inneren Halterahmens mit dem Lichtmodul kann mittels eines Antriebsmoduls erfolgen, das magnetisch, pneumatisch oder hydraulisch arbeitet. Der äußere Halterahmen kann mittels Stellschrauben verschwenkt werden.

Der vorliegenden Erfindung liegt daher die Problemstellung zugrunde, eine verschleißarme, kompakte Scheinwerferverstellvorrichtung zu entwickeln.

Diese Problemstellung wird mit den Merkmalen des Hauptanspruches gelöst.

Weitere Einzelheiten der Erfindung ergeben sich aus den Unteransprüchen und der nachfolgenden Beschreibung schematisch dargestellter Ausführungsformen.
- Figur 1:: Scheinwerfer mit Scheinwerferverstellvorrichtung;
- Figur 2:: Teillängsschnitt von Figur 1;
- Figur 3:: Scheinwerferverstellvorrichtung mit Kreuzgelenk;
- Figur 4:: Scheinwerferverstellvorrichtung mit starrem Übertragungselement;
- Figur 5:: Scheinwerferverstellvorrichtung mit Gleitlagerung;
- Figur 6:: Draufsicht auf die Klemm- und/oder Lösevorrichtung aus Figur 5;
- Figur 7:: Klemm- und/oder Lösevorrichtung mit Exzenter;
- Figur 8:: Pneumatisch betätigte Klemm- und/oder Lösevorrichtung.

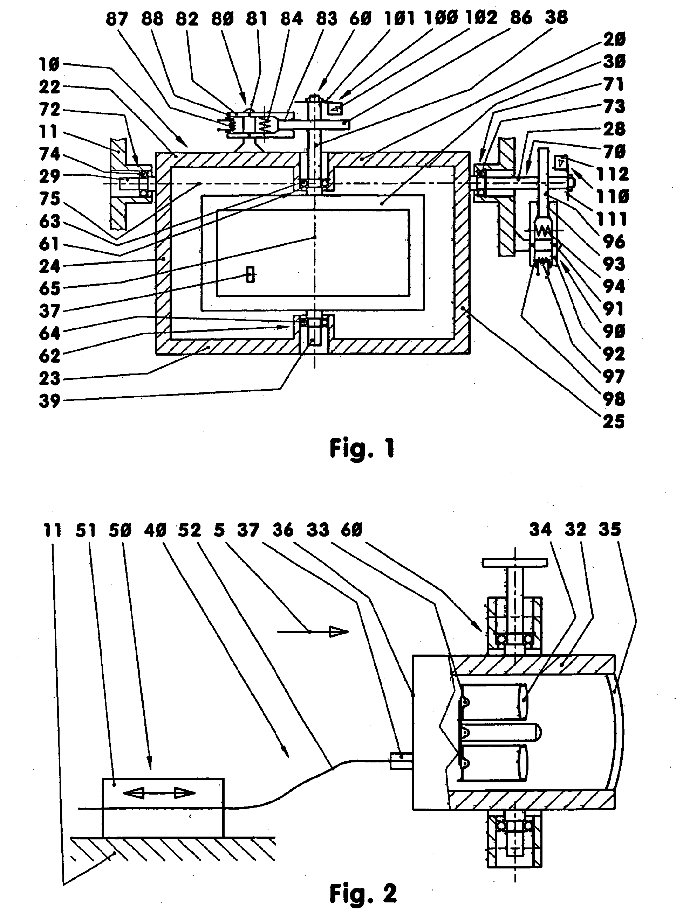

Die Figuren 1 und 2 zeigen einen Scheinwerfer (10) eines Kraftfahrzeugs mit einer Scheinwerferverstellvorrichtung (40). Die Figur 1 ist ein Teilschnitt durch den Scheinwerfer (10), in Fahrtrichtung (5) des Kraftfahrzeugs gesehen. In der Figur 2 ist ein Teillängsschnitt durch den Scheinwerfer (10) dargestellt.

Der Scheinwerfer (10) umfasst beispielsweise ein Scheinwerfergehäuse (11) und z.B. ein Lichtmodul (30), das mittels eines Zwischenteils (20) im Scheinwerfergehäuse (11) gelagert ist. Der Scheinwerfer (10) kann auch mehrere Lichtmodule (30) umfassen. Diese sind dann entweder mittels eines gemeinsamen Zwischenteils (20) im Scheinwerfergehäuse (11) gelagert oder jedes Lichtmodul (30) ist in einem einzelnen Zwischenteil (20) im Scheinwerfergehäuse (11) gelagert. In einem Kraftfahrzeug können mehrere Scheinwerfer (10) z.B. Fernlicht, Abblendlicht- und Nebelscheinwerfer, in einem gemeinsamen Einbaugehäuse angeordnet sein. Die Scheinwerferverstellvorrichtung (40) umfasst das zu verstellende Lichtmodul (30) oder die gemeinsam zu verstellenden Lichtmodule (30), eine Antriebseinheit (50) und zwei Schwenkvorrichtungen (60, 70).

Das Lichtmodul (30) hat in der Darstellung der Figur 1 einen rechteckigen Querschnitt. Es umfasst ein Gehäuse (32), in dem hier beispielsweise drei übereinander angeordnete Lichtquellen (33) sitzen, vgl. Figur 2. Die Lichtquellen (33) sind z.B. Lumineszenzdioden. Jeder der Lichtquellen (33) ist in diesem Ausführungsbeispiel eine optische Linse (34) optisch nachgeschaltet. Das Gehäuse (32) wird in Fahrtrichtung (5) z.B. durch eine transparente Scheibe (35), beispielsweise eine Klarsichtscheibe, eine optische Linse, etc. begrenzt. An der Rückseite (36) des Lichtmoduls (30) ist außermittig ein Befestigungselement (37) angeordnet. Das in den Figuren 1 und 2 dargestellte Lichtmodul (30) hat auf seiner Ober- und auf seiner Unterseite zwei miteinander fluchtende Lagerzapfen (38, 39).

Das Zwischenteil (20) ist beispielsweise ein Zwischenrahmen (20), der das Lichtmodul (30) umgibt. Dieser Zwischenrahmen (20) hat im Ausführungsbeispiel zwei Querträger (22, 23), die mittels zweier Stützen (24, 25) miteinander verbunden sind. In den Querträgern (22, 23) sind die beiden Lagerzapfen (38, 39) jeweils in einer Lagerstelle (61, 62) aufgenommen. Hierbei ist beispielsweise die obere Lagerstelle (61) als Festlager und die untere Lagerstelle (62) als Loslager ausgebildet. In diesem Ausführungsbeispiel haben beide Lagerstellen (61, 62) Wälzlager (63, 64), z.B. Rillenkugellager. Auch der Einsatz von.Rollenlagern, Nadellagern, Gleitlagern, etc. ist denkbar.

Die Lagerung (61, 62) des Lichtmoduls (30) im Zwischenrahmen (20) ist Teil einer ersten Schwenkvorrichtung (60). Mittels dieser Schwenkvorrichtung (60) kann das Lichtmodul (30) beispielsweise um eine vertikale Achse (65) geschwenkt werden.

An den beiden Stützen (24, 25) hat der Zwischenrahmen (20) nach außen zeigende, miteinander fluchtende Lagerzapfen (28, 29), die in Lagerstellen (71, 72) des Scheinwerfergehäuses (11) gelagert sind. Das Festlager (71) und das Loslager (72) umfassen beispielsweise Wälzlager (73, 74). Die Lagerstellen (71, 72) können so ausgeführt sein wie die Lagerstellen (61, 62).

Die Lagerung (71, 72) des Zwischenrahmens (20) im Scheinwerfergehäuse (11) ist Teil einer zweiten Schwenkvorrichtung (70), die ein Schwenken des Zwischenrahmens (20) mit dem Lichtmodul (30) um eine horizontale Achse (75) zulässt. Der Zwischenrahmen (20) kann indirekt im Scheinwerfergehäuse (11) gelagert sein. Beispielsweise ist er in einem Adapterbauteil gelagert, das im Scheinwerfergehäuse (11) sitzt.

Im Ausführungsbeispiel schneiden sich die beiden Schwenkachsen (65, 75), wobei sie beispielsweise normal zueinander ausgerichtet sind. Die beiden Schwenkachsen (65, 75) können sich auch kreuzen, ohne sich zu schneiden, wobei zwischen ihnen beispielsweise ein Abstand von 50 mm besteht. Dies erhöht die Gestaltungsfreiheit des Einbauraums. Die Schwenkachsen (65, 75) können in der Darstellung der Figur 1 Winkel einschließen, die ungleich 90 Grad sind.

Die Lagerungen (61, 62, 71, 72) können umgekehrt angeordnet sein. Beispielsweise können am Lichtmodul (30) anstatt der Lagerzapfen (38, 39) Hülsen angeordnet sein. Am Zwischenrahmen (30) sitzen dann beispielsweise Zapfen, die in den Hülsen mittels Gleit- oder Wälzlager gelagert sind. Auch ist es denkbar, das Lichtmodul (30) im Zwischenrahmen (20) mittels einer Schwenkvorrichtung (70) zu lagern, die ein Schwenken um eine horizontale Achse (75) zulässt. Der Zwischenrahmen (20) ist dann gegenüber dem Scheinwerfergehäuse (11) um eine vertikale Achse (65) schwenkbar.

In dem in den Figur 1 dargestellten Ausführungsbeispiel umfasst jede Schwenkvorrichtung (60, 70) eine Klemm- und/oder Lösevorrichtung (80, 90) und eine Weg- und/oder Winkelmessvorrichtung (100, 110). Die beiden Klemm- und/oder Lösevorrichtungen (80, 90) sind im Ausführungsbeispiel gleichartig aufgebaut. Ebenso sind hier die beiden Weg- und/oder Winkelmessvorrichtungen (100, 110) gleichartig aufgebaut.

Die Klemm- und/oder Lösevorrichtung (80) der ersten Schwenkvorrichtung (60) ist hier am Zwischenrahmen (20) befestigt, die Klemm- und/oder Lösevorrichtung (90) der zweiten Schwenkvorrichtung (70) sitzt am Scheinwerfergehäuse (11). Die Lagerzapfen (28, 38), die das jeweiligen Festlager (61, 71) durchdringen, tragen eine Scheibe (86, 96). Die einzelne Klemm- und/oder Lösevorrichtung (80, 90) hat zwei in Schwenklagern (81, 91) gelagerte Arme (82, 92). Diese Arme (82, 92) haben Auflageflächen (83, 93), die mittels einer Feder (84, 94) von beiden Seiten an die Scheibe (86, 96) angepresst werden.

Um eine Schwenkbewegung freizugeben, wird beispielsweise ein Elektromagnet (87, 97) bestromt, der zwischen den rückwärtigen Teilen (88, 98) der Arme (82, 92) angeordnet ist. Die rückwärtigen Teile (88, 98) der Arme (82, 92) werden an den Magneten (87, 97) angezogen, wobei die Auflageflächen (83, 93) von der Scheibe (86, 96) abgehoben werden. Das Lichtmodul (30) kann nun um die freigegebene Schwenkachse (65, 75) geschwenkt werden. Wird der Stromfluss im Magneten (87, 97) unterbrochen, werden die Auflageflächen (83, 93) mittels der Feder (84, 94) an die Scheibe (86, 96) gepresst. Die Scheibe (86, 96) wird in diesem Zustand geklemmt und die Schwenkvorrichtung (60, 70) wird blockiert.

Die Weg- und/oder Winkelmesssysteme (100, 110) umfassen hier beispielsweise jeweils eine Messscheibe (101, 111), die auf den Lagerzapfen (28, 38) sitzen. Die Messscheiben (101, 111) sind z.B. absolut codierte Winkelmessscheiben (101, 111), die mittels Lesevorrichtungen (102, 112) ausgewertet werden. Anstatt der Winkelmeßsysteme (101, 102; 111, 112) können die Schwenkvorrichtungen (60, 70) Wegmesssysteme, Gyrometer, etc. aufweisen. Auch eine Ausführung der Schwenkvorrichtungen (60, 70) ohne Meßsysteme, z.B. bei Einsatz einer Nulllagenerkennung, ist denkbar.

Die Antriebseinheit (50) umfasst z.B. einen am Scheinwerfergehäuse (11) befestigten Motor (51), der mittels eines Übertragungselements (52) mit dem Befestigungselement (37) am Lichtmodul (30) verbunden ist. Der hier dargestellte Motor (51) ist z.B. ein Linear-Schrittmotor (51), der als Übertragungselement (52) einen Federdraht (52) fördert. Das Übertragungselement (52) kann auch ein Kardan, eine biegbare Stange, etc. sein. Anstatt eines Linearmotors (51) kann die Antriebseinheit (50) auch einen Rotationsmotor aufweisen. Das Übertragungselement (52) umfasst dann beispielsweise ein Getriebe.

Dieses kann ein Kurbelgetriebe, ein Rädergetriebe, ein Kettengetriebe, eine Gewindespindel etc. sein.

Die vom Motor (51) erzeugte Antriebskraft wird mittels des Übertragungselements (52) übertragen und wirkt am Befestigungselement (37) auf das Lichtmodul (30). Die Antriebseinheit (50) ist so angeordnet, dass die Richtung der Kraft, die auf das Lichtmodul (30) wirkt, keine der Schwenkachsen (65, 75) schneidet. So kann die Antriebseinheit (50) in beide Schwenkrichtungen - zur Verstellung der Neigung um die horizontale Achse (75) und zur Einstellung des Schwenkwinkels um die vertikale Achse (65) - ein Drehmoment auf das Lichtmodul (30) aufbringen. Die Scheinwerferverstellvorrichtung (40) erfordert somit einen geringen Einbaurauraum. Auch ist es möglich, bei einem vorgegebenen engen Einbauraum die Scheinwerferverstellvorrichtung (40) an diesen Einbauraum anzupassen.

Bevor die Scheinwerferverstellvorrichtung (40) betätigt wird, sind beispielsweise beide Klemm- und/oder Lösevorrichtungen (80, 90) geschlossen. Die Antriebseinheit (50) ist entlastet. Mittels des Winkelmeßsystems (110) wird der Ist-Neigungswinkel des Lichtmoduls (30) in bezug auf die horizontale Achse (75) und mittels des Winkelmeßsystems (100) der Ist-Schwenkwinkel des Lichtmoduls (30) in bezug auf die vertikale Achse (65) ermittelt.

Differiert der Ist-Neigungswinkel vom Soll-Neigungswinkel, wird mittels der Schwenkvorrichtung (70) der Ist-Neigungswinkel verändert. Hierzu wird die Klemm- und/oder Lösevorrichtung (90) gelüftet und mittels der Antriebseinheit (50) der Neigungswinkel des Lichtmoduls (30) eingestellt. Anschließend wird die Klemm- und/oder Lösevorrichtung (90) wieder geschlossen.

Wird eine Differenz des Ist-Schwenkwinkels vom Soll-Schwenkwinkel ermittelt, wird nach dem Lösen der Klemm- und/oder Lösevorrichtung (80) mittels der Antriebseinheit (50) der Schwenkwinkel des Lichtmoduls (30) verstellt. Anschließend wird die Klemm- und/oder Lösevorrichtung (80) wieder geschlossen.

Zur Ermittlung der Differenz zwischen den Ist- und den Soll-Winkelwerten sind die Weg- und/oder Winkelmessvorrichtungen (100, 110) beispielsweise jeweils in einen Regelkreis eingebunden, dessen Stellglied der Motor (51) ist. Bei einer Ausführung ohne Weg- und/oder Winkelmesssystemen (100, 110) kann beim Einsatz eines Linear-Schrittmotors (51) die Ist-Winkellage beispielsweise aus der Schrittzahl seit der letzten Justierung ermittelt werden. Die Soll-Winkellage kann somit schnell und präzise eingestellt werden.

Nach dem Schließen der Klemm- und/oder Lösevorrichtungen (80, 90) ist die Antriebseinheit (50) wieder entlastet. Erschütterungen während des Fahrbetriebs werden nicht über das Übertragungselement (52) auf den Motor (51) übertragen. Die Gefahr des Verschleißes der Scheinwerferverstellvorrichtung (40) wird somit vermindert.

Die beiden Klemm- und/oder Lösevorrichtungen (80, 90) können so angesteuert sein, dass sie nur alternativ gelöst werden. Sie sind dann z.B. gegenseitig verriegelt, so dass entweder der Neigungswinkel oder der Schwenkwinkel des Lichtmoduls (30) verstellt wird.

Werden beide Klemm- und/oder Lösevorrichtungen (80, 90) gelöst, können der Schwenk- und der Neigungswinkel des Lichtmoduls (30) gleichzeitig verstellt werden. Sobald einer der Ist-Winkel seinen Soll-Winkel erreicht hat, wird die zugehörige Klemm- und/oder Lösevorrichtung (80; 90) geschlossen.

Anstatt zweier Klemm- und/oder Lösevorrichtungen (80, 90) kann die Scheinwerferverstellvorrichtung (40) beispielsweise eine schwergängige Schwenkvorrichtung (70) zur Neigungsverstellung und eine leichtgängige Schwenkvorrichtung (60) zur Einstellung des Schwenkwinkels haben. Letztere hat dann eine Klemm- und/oder Lösevorrichtung (80). Die Verstellung des Schwenkwinkels erfolgt bei gelüfteter Klemm- und/oder Lösevorrichtung (80), die Verstellung des Neigungswinkels bei geschlossener Klemm- und/oder Lösevorrichtung (80).

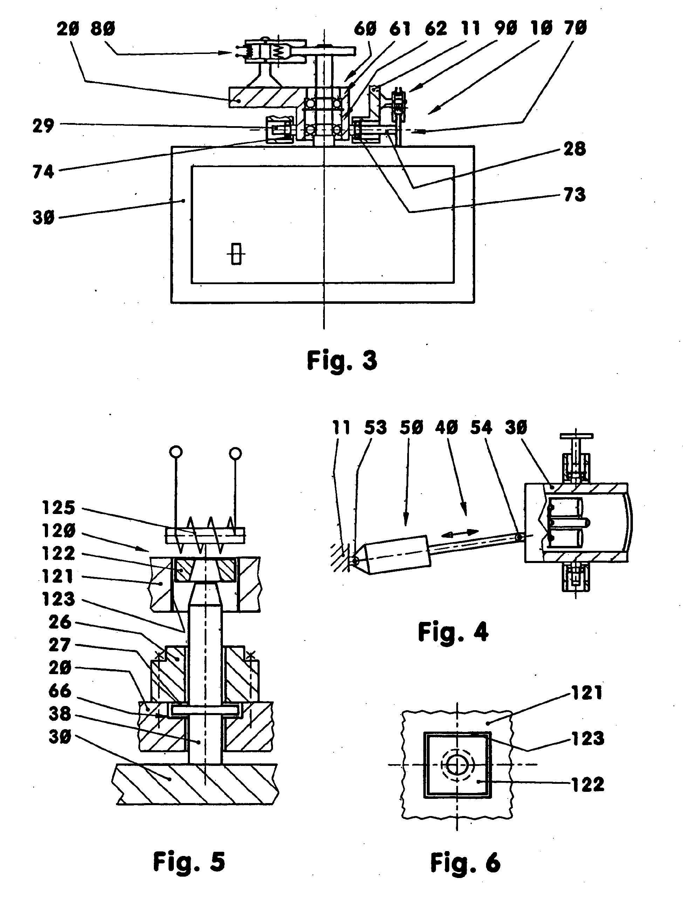

Die Figur 3 zeigt eine Scheinwerferverstellvorrichtung (40) mit einem Kreuzgelenk. Die beiden Schwenkvorrichtungen (60, 70) umfassen beispielsweise gleichartige Bauteile wie die in den Figuren 1 und 2 dargestellten Schwenkvorrichtungen (60, 70) .

Das Lichtmodul (30) ist mittels der Lagerstellen (61, 62) im Zwischenteil (20) schwenkbar gelagert. Das Zwischenteil (20) trägt hier zwei Lagerzapfen (28, 29), die mittels der Wälzlager (73, 74) im Scheinwerfergehäuse (11) gelagert sind. Auch diese Scheinwerferverstellvorrichtung (40) kann Weg- oder Winkelmeßsysteme (100, 110) haben.

Es ist auch denkbar, die in der Figur 1 und 3 dargestellten Ausführungsbeispiele zu kombinieren. So kann beispielsweise die Schwenkvorrichtung (60) zum Schwenken des Lichtmoduls (30) so ausgeführt sein, wie sie in der Figur 1 dargestellt ist. Das Zwischenteil (20) ist dann z.B. als Rahmen ausgebildet. Die Schwenkvorrichtung (70) zur Verstellung des Neigung kann dann wie in der Figur 3 dargestellt ausgeführt sein.

In der Figur 4 ist eine Antriebseinheit (50) mit einem biegesteifen Übertragungselement (52) dargestellt. Der hier gezeigte Linearmotor (51) ist beispielsweise in einem Gelenklager (53) am Scheinwerfergehäuse (11) befestigt. Mittels eines weiteren Gelenklagers (54) ist das Übertragungselement (52) am Lichtmodul (30) befestigt.

Die Figuren 5 und 6 zeigen beispielsweise Bauteile einer Schwenkvorrichtung (60) mit einer Gleitlagerung (66) und einer Klemm- und/oder Lösevorrichtung (120). Der z.B. obere Lagerzapfen (38) des Lichtmoduls (30) ist beispielsweise im Zwischenteil (20) axial und radial gelagert. Zur Aufnahme von Kräften, die der Schwerkraft entgegenwirken, verfügt ein mit dem Zwischenteil (20) z.B. verschraubter Deckel (26) über eine weitere Gleitfläche (27).

Der Lagerzapfen (38) hat hier ein kegelstumpfförmig ausgebildetes Ende, mit dem er in ein Führungsteil (121) hineinragt. Das Führungsteil (121) ist beispielsweise mit dem Zwischenteil (20) verbunden oder es ist Teil des Zwischenteils (20). Es hat eine z.B. quadratische Aussparung (123), in der verdrehsicher ein hier in vertikaler Richtung verschiebbarer Bremskonus (122) sitzt, vgl. Figur 6. Anstatt eines quadratischen Querschnitts kann die Aussparung (123) und der Bremskonus (122) auch einen dreieckigen, rechteckigen, sechseckigen oder einen anderen nichtzylindrischen Querschnitt haben.

Oberhalb des Führungsteils (121) sitzt in der Darstellung der Figur 5 ein Elektromagnet (125). Wird dieser bestromt, wird der Bremskonus (122) nach oben gezogen und damit die Schwenkvorrichtung (60) gelöst. Beim Abschalten des Stroms setzt sich der Bremskonus (122) auf den Lagerzapfen (38) auf und verhindert das weitere Schwenken des Lichtmoduls (30). Der Lagerzapfen (38) und der Bremskonus (122) können Reibbeläge aufweisen, um die Klemmwirkung der Klemm- und/oder Lösevorrichtung (60) zu erhöhen.

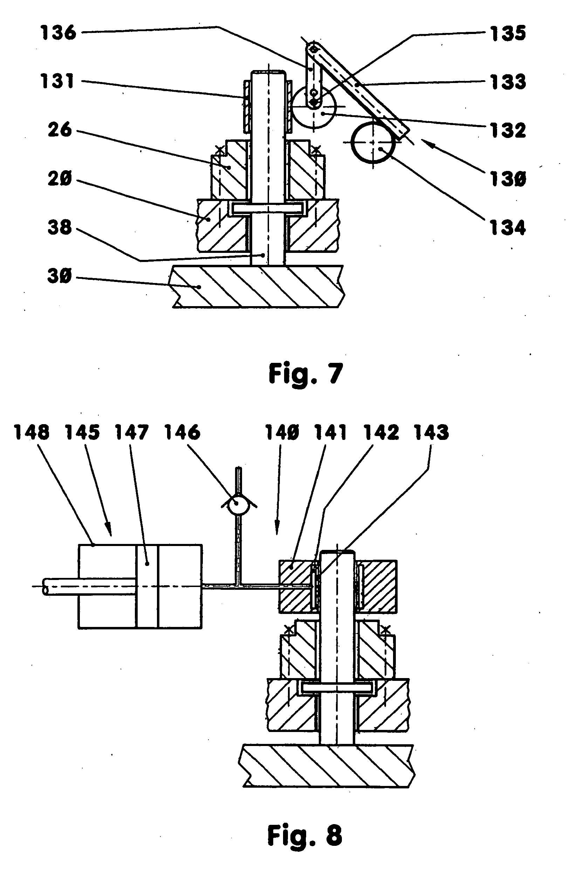

In der Figur 7 ist eine weitere Klemm- und/oder Lösevorrichtung (130) dargestellt. Auf dem Lagerzapfen (38) sitzt mit radialem Spiel eine Hülse (131). Die Klemm- und/oder Lösevorrichtung (130) umfasst beispielsweise ein exzentrisch gelagertes Rad (132), das hier mittels einer Zahnstange (133) mit einem Antriebsrad (134) gekoppelt ist. Das Antriebsrad (134) sitzt z.B. auf einer hier nicht dargestellten Motorwelle. Zum Klemmen dreht der Motor das Antriebsrad (134) beispielsweise im Uhrzeigersinn. Mittels der Zahnstange (133) und des Kopplungsgliedes (136) wird das Rad (132) um seinen Drehpunkt (135) gedreht. Hierbei presst es die Hülse (131) an den Lagerzapfen (38) und bewirkt ein Klemmen der Schwenkvorrichtung (60). Zum Lösen der Klemm- und/oder Lösevorrichtung (130) dreht der Motor beispielsweise in die entgegengesetzte Richtung.

Die in der Figur 8 dargestellte Klemm- und/oder Lösevorrichtung (140) ist beispielsweise pneumatisch betätigt. Ein ringförmiges, z.B. aus Kunststoff hergestelltes Klemmelement (141) umgibt den Lagerzapfen (38). Das Klemmelement (141) weist einen Ringraum (142) auf, der beispielsweise von der Innenwandung (143) des Klemmelements (141) einen Abstand von wenigen Zehntelmillimetern hat. Zur Ansteuerung der Klemm- und/oder Lösevorrichtung (140) dient beispielsweise eine Zylinder-Kolbeneinheit (145) und ein Rückschlagventil (146).

Um die Klemm- und/oder Lösevorrichtung (140) zu klemmen, wird der Kolben (147) der Zylinder-Kolbeneinheit (145) in den Zylinder (148) eingefahren. Das Rückschlagventil (146) sperrt. Der Ringraum (142) wird z.B. mit Luft befüllt und verformt die Innenwandung (143) des Klemmelements (141) derart, dass sie an den Lagerzapfen (38) angepresst wird.

Zum Lösen der Klemm- und/oder Lösevorrichtung (140) wird der Kolben (147) aus dem Zylinder (148) herausgezogen. Das Klemmelement (141) wird elastisch zurückverformt, wobei die Klemmung gelöst wird. Gegebenenfalls kann hierbei über das Rückschlagventil (146) Luft aus der Umgebung angesaugt werden.

Die Klemm- und/oder Lösevorrichtungen (80, 90, 120, 130, 140) können auch zwischen dem Zwischenteil (20) und dem Lichtmodul (30) und/oder dem Scheinwerfergehäuse (11) und dem Zwischenteil (20) angeordnet sein. Bei einer Anordnung außerhalb der Schwenkachsen (65, 75) kann die Klemm- und/oder Lösevorrichtung (80, 90, 120, 130, 140) gegebenenfalls mit einer niedrigen Klemmkraft ausgeführt sein.

Die vorstehend beschriebenen Ausführungsbeispiele können auch miteinander kombiniert werden.

### Bezugszeichenliste:

- 5: Fahrtrichtung
- 10: Scheinwerfer
- 11: Scheinwerfergehäuse

- 20: Zwischenteil, Zwischenrahmen
- 22, 23: Querträger
- 24, 25: Stützen
- 26: Deckel
- 27: Gleitfläche
- 28, 29: Lagerzapfen

- 30: Lichtmodul
- 32: Gehäuse
- 33: Lichtquellen
- 34: optische Linse
- 35: transparente Scheibe
- 36: Rückseite
- 37: Befestigungselement
- 38, 39: Lagerzapfen

- 40: Scheinwerferverstellvorrichtung

- 50: Antriebseinheit
- 51: Motor, Linearmotor
- 52: Übertragungselement, Federdraht
- 53, 54: Gelenklager

- 60: Schwenkvorrichtung zur Schwenkwinkelverstellung
- 61: Lagerstelle, Festlager
- 62: Lagerstelle, Loslager
- 63, 64: Wälzlager
- 65: Schwenkachse, vertikale Achse
- 66: Gleitlagerung

- 70: Schwenkvorrichtung zur Neigungswinkelverstellung
- 71: Lagerstelle, Festlager
- 72: Lagerstelle, Loslager
- 73, 74: Wälzlager
- 75: horizontale Achse, Schwenkachse für Neigungswinkelverstellung

- 80, 90: Klemm- und/oder Lösevorrichtung
- 81, 91: Schwenklager
- 82, 92: Arme
- 83, 93: Auflageflächen
- 84, 94: Feder

- 86, 96: Scheibe
- 87, 97: Elektromagnet
- 88, 98: rückwärtige Teile von (82, 92)
- 100, 110: Weg- und/oder Winkelmeßsystem
- 101, 111: Messscheiben, winkelmessschieben
- 102, 112: Lesevorrichtung

- 120: Klemm- und/oder Lösevorrichtung
- 121: Führungsteil
- 122: Bremskonus
- 123: Aussparung

- 125: Elektromagnet

- 130: Klemm- und/oder Lösevorrichtung
- 131: Hülse
- 132: Rad
- 133: Zahnstange
- 134: Antriebsrad
- 135: Drehpunkt
- 136: Kopplungsglied

- 140: Klemm- und/oder Lösevorrichtung
- 141: Klemmelement
- 142: Ringraum
- 143: Innenwandung

- 145: Zylinder-Kolbeneinheit
- 146: Rückschlagventil
- 147: Kolben
- 148: Zylinder

## Patentansprüche

1. Scheinwerferverstellvorrichtung (40) mit mindestens einem in einem Zwischenteil (20) mittels einer Schwenkvorrichtung (60) um eine erste Schwenkachse (65) schwenkbar gelagerten Lichtmodul (30), wobei das Zwischenteil (20) im Scheinwerfergehäuse (11) direkt oder indirekt mittels einer weiteren Schwenkvorrichtung (70) um eine zweite Schwenkachse (75) schwenkbar gelagert ist, **dadurch gekennzeichnet,**
**dass** die Scheinwerferverstellvorrichtung (40), genau eine Antriebseinheit (50) umfasst, die das mindestens eine Lichtmodul (30) gegenüber dem Scheinwerfergehäuse (11) verstellt:
**dass** eine Verstellung um die erste Schwenkachse (65) und um die zweite Schwenkachse (75) unabhängig voneinander erfolgen kann;
**dass** je Schwenkachse (65, 75) eine in beliebiger Verstellposition um die jeweilige Schwenkachse (65, 75) wirkende Klemm- und/oder Lösevorrichtung (80; 90; 120; 130; 140) vorgesehen ist;
**dass** die Antriebseinheit (50) so angeordnet ist, dass die Richtung der auf das Lichtmodul (30) wirkenden Kraft keine der Schwenkachsen (65; 75) schneidet
**dass** die einzige Antriebseinheit (50) zum Verschwenken um die erste und die zweite Schwenkachse (65; 75) mit einem Befestigungselement (37) am Lichtmodul (30) verbunden ist.

2. Scheinwerferverstellvorrichtung nach Anspruch 1, **dadurch gekennzeichnet, dass** beide Schwenkvorrichtungen (60; 70) gegenseitig verriegelte Klemm- und/oder Lösevorrichtungen (80; 90; 120; 130; 140) umfassen:

3. Scheinwerferverstellvorrichtung nach Anspruch 1, **dadurch gekennzeichnet, dass** mindestens eine Schwenkvorrichtung (60; 70) eine elektromagnetisch betätigte Klemm- und/oder Lösevorrichtungen (80; 90; 120) umfasst.

4. Scheinwerferverstellvorrichtung nach Anspruch 1, **dadurch gekennzeichnet, dass** die Antriebseinheit (50) einen Linear-Schrittmotor (51) umfasst.

5. Scheinwerferverstellvorrichtung nach Anspruch 4, **dadurch gekennzeichnet, dass** die Antriebseinheit (50) ein biegbares Übertragungselement (52) umfasst, das den Motor (51) mit dem Lichtmodul (30) verbindet.

6. Scheinwerferverstellvarrichtung nach Anspruch 1, **dadurch gekennzeichnet, dass** mindestens eine Schwenkvorrichtung (60; 70) ein absolutes Weg- und/oder Winkelmeßsystem (100; 110) umfasst.

7. Scheinwerferverstellvorrichtung nach Anspruch 1, **dadurch gekennzeichnet, dass** mindestens eine Schwenkvorrichtung (60; 70) Wälzlager (63, 64) umfasst.

8. Scheinwerferverstellvorrichtung nach Anspruch 1, **dadurch gekennzeichnet, dass** die Schwenkachsen (65; 75) der Schwenkvorrichtungen (60; 70) sich zumindest kreuzen.

## Claims

1. Headlight adjusting device (40) having at least one light module (30) mounted in an intermediate part (20) pivotably about a first pivot axis (65) by means of a pivot device (60), the intermediate part (20) in the headlight housing (11) being mounted pivotably about a second pivot axis (75) directly or indirectly by means of a further pivot device (70), **characterized in that**
the headlight adjusting device (40) comprises exactly one drive unit (50) adjusting the at least one light module (30) relative to the headlight housing (11);
adjustments about the first pivot axis (65) and about the second pivot axis (75) can be performed independently of one another;
a clamping and/or releasing device (80; 90; 120; 130; 140) acting in any adjusted position about the respective pivot axis (65, 75) is provided for each pivot axis (65, 75);
the drive unit (50) is arranged such that the direction of the force acting on the light module (30) does not intersect either of the two pivot axes (65; 75);
the single drive unit (50) is connected to a fastening element (37) on the light module (30) for pivoting about the first and the second pivot axes (65; 75).

2. Headlight adjusting device according to Claim 1, **characterized in that** both pivot devices (60; 70) comprise mutually locked clamping and/or releasing devices (80; 90; 120; 130; 140).

3. Headlight adjusting device according to Claim 1, **characterized in that** at least one pivot device (60; 70) comprises an electromagnetically operated clamping and/or releasing device (80; 90; 120).

4. Headlight adjusting device according to Claim 1, **characterized in that** the drive unit (50) comprises a linear stepping motor (51).

5. Headlight adjusting device according to Claim 4, **characterized in that** the drive unit (50) comprises a flexible transmission element (52) connecting the motor (51) to the light module (30).

6. Headlight adjusting device according to Claim 1, **characterized in that** at least one pivot device (60; 70) comprises an absolute travel and/or angle measuring system (100, 110).

7. Headlight adjusting device according to Claim 1, **characterized in that** at least one pivot device (60; 70) comprises anti-friction bearings (63, 64).

8. Headlight adjusting device according to Claim 1, **characterized in that** the pivot axes (65; 75) of the pivot devices (60; 70) at least cross.

## Revendications

1. Dispositif de réglage de phares (40) avec au moins un module lumineux (30) logé dans une pièce intermédiaire (20) de manière à pouvoir pivoter autour d'un premier axe de pivotement (65) à l'aide d'un dispositif de pivotement (60), sachant que la pièce intermédiaire (20) est logée dans le boîtier de phare (11) de manière à pouvoir pivoter autour d'un deuxième axe de pivotement (75) directement ou indirectement au moyen d'un autre dispositif de pivotement (70), **caractérisé en**
**que** le dispositif de réglage de phares (40) comprend exactement une unité d'entraînement (50) qui règle l'au moins un module lumineux (30) par rapport au boîtier de phare (11) ;
qu'un réglage autour du premier axe de pivotement (65) et autour du deuxième axe de pivotement (75) peut avoir lieu indépendamment l'un de l'autre ;
qu'est prévu, par axe de pivotement (65, 75), un dispositif de serrage et/ou de desserrage (80 ; 90 ; 120 ; 130 ; 140) agissant autour de l'axe de pivotement respectif (65, 75) dans n'importe quelle position de réglage ;
que l'unité d'entraînement (50) est disposée de telle manière que la direction de la force agissant sur le module lumineux (30) ne coupe aucun des axes de pivotement (65 ; 75) ;
que l'unique unité d'entraînement (50) permettant le pivotement autour du premier et du deuxième axe de pivotement (65 ; 75) est reliée à un élément de fixation (37) sur le module lumineux (30).

2. Dispositif de réglage de phares selon la revendication 1, **caractérisé en ce que** les deux dispositifs de pivotement (60 ; 70) comprennent des dispositifs de serrage et/ou de desserrage (80 ; 90 ; 120 ; 130 ; 140) mutuellement verrouillés.

3. Dispositif de réglage de phares selon la revendication 1, **caractérisé en ce qu'**au moins un dispositif de pivotement (60 ; 70) comprend un dispositif de serrage et/ou de desserrage (80 ; 90 ; 120) à commande électromagnétique.

4. Dispositif de réglage de phares selon la revendication 1, **caractérisé en ce que** l'unité d'entraînement (50) comprend un moteur linéaire pas à pas (51).

5. Dispositif de réglage de phares selon la revendication 4, **caractérisé en ce que** l'unité d'entraînement (50) comprend un élément de transmission (52) flexible qui relie le moteur (51) au module lumineux (30).

6. Dispositif de réglage de phares selon la revendication 1, **caractérisé en ce qu'**au moins un dispositif de pivotement (60 ; 70) comprend un système absolu de mesure de déplacement et/ou angulaire (100 ; 110).

7. Dispositif de réglage de phares selon la revendication 1, **caractérisé en ce qu'**au moins un dispositif de pivotement (60 ; 70) comprend des paliers à roulement (63 ; 64).

8. Dispositif de réglage de phares selon la revendication 1, **caractérisé en ce que** les axes de pivotement (65 ; 75) des dispositifs de pivotement (60 ; 70) se croisent au moins.
